# EUROPÄISCHE PATENTSCHRIFT

(11) **EP 0 924 114 B1**
(45) Veröffentlichungstag und Bekanntmachung des Hinweises auf die Patenterteilung: **12.02.2003**
(21) Anmeldenummer: 98122312.6
(22) Anmeldetag: 24.11.1998
(51) Int. Cl.: B60G 3/20

(54) **Einzelradaufhängung mit einem über eine Koppelstange abgestützten Radträger**
Independant suspension with a kingpin guided by a linking rod
Suspension indépendante avec porte-fusée guidé par une barre de liaison

(30) Priorität: 17.12.1997 DE 19756065
(43) Veröffentlichungstag der Anmeldung: 23.06.1999
(73) Patentinhaber: DaimlerChrysler AG, 70567 Stuttgart (DE)
(72) Erfinder: Brühl, Hubert, 73550 Waldstetten (DE)

(56) Entgegenhaltungen:
- EP-A- 0 374 504
- DE-A- 2 642 939
- DE-A- 3 939 312
- PATENT ABSTRACTS OF JAPAN vol. 96, no. 10, 31. Oktober 1996 (1996-10-31) -& JP 08 156545 A (NISSAN), 18. Juni 1996 (1996-06-18)
- PATENT ABSTRACTS OF JAPAN vol. 97, no. 5, 30. Mai 1997 (1997-05-30) -& JP 09 002032 A (NISSAN), 7. Januar 1997 (1997-01-07)

## Beschreibung

Die Erfindung betrifft eine Einzelradaufhängung für Vorderräder eines Kraftfahrzeuges mit einem zu Lenkzwecken schwenkbaren Radträger, dessen unteres Ende an einem unteren Querlenker gelagert ist und dessen oberer Bereich sich zum einen über eine Koppelstange an diesem unteren Querlenker auf dessen Wirkungslinie und zum anderen über einen oberen Lenker am Fahrzeugaufbau abstützt.

Aus der DE 26 42 939 ist eine bauraumsparende Einzelradaufhängung für ein lenkbares Kraftfahrzeugrad bekannt, bei der der Radträger über einen unteren Schräglenker und einen oberen Stablenker am Fahrzeugaufbau an drei Stellen angelenkt ist. Der Radträger stützt sich über eine Koppelstange am Schräglenker ab. Die Gelenkstellen zwischen dem Radträger und den beiden Lenkern liegen auf der Lenk- bzw. Spreizungsachse. Dadurch ist der Bauraum für die radseitige Bremseinrichtung begrenzt.

Ferner ist aus der JP 08 156 545 A eine Einzelradaufhängung bekannt, bei der das untere Ende des Radträgers über zwei separate untere, im wesentlichen horizontale Einzellenker am Fahrzeugaufbau gelagert ist. Das obere Ende des Radträgers stützt sich zum einen über einen oberen, annähernd horizontalen Einzellenker am Fahrzeugaufbau und zum anderen über eine Koppelstange an einem der unteren Einzellenker ab. Da der Schnittpunkt zwischen der Koppelstange und dem oberen Einzellenker weit vom Rad entfernt ist, schneidet die Wirkungslinie der Koppelstange nicht die theoretische Lenkachse. Sie kreuzt sie in der Nähe des Radträgers auch nicht in kurzem Abstand. Dafür benötigt die Radaufhängung viel Platz im Radkastenraum. Auch leidet der Fahrkomfort unter konstruktionsbedingten, ein- und ausfederwegabhängigen Nachlaufänderungen.

Der vorliegenden Erfindung liegt das Problem zugrunde, eine Mehrlenkerradaufhängung zu schaffen, die bei möglichst wenigen radseitigen Anlenkstellen wenig Platz im Bereich der Felgenschüssel und des reifennahen Raumes benötigt.

Das Problem wird mit den Merkmalen des Hauptanspruchs gelöst. Dabei liegt die auf der Wirkungslinie des unteren Querlenkers oder nahe dieser Wirkungslinie liegende Anlenkstelle der Koppelstange in Fahrtrichtung gesehen hinter der durch die Radmittellinie vorgegenen vertikale Fahrzeugquerebene. Bei der Einzelradaufhängung ist entweder der obere Lenker in der Nähe des oberen Endes des Radträgers an der Koppelstange angelenkt oder die Koppelstange ist in der Nähe des oberen Endes des Radträgers am oberen Lenker angelenkt. In beiden Fällen schneiden und/oder kreuzen in einem kurzem Abstand die Wirkungslinien des oberen Lenkers und der Koppelstange die Lenkachse.

In beiden Fällen benötigt der Radträger eine Gelenkstelle weniger, so daß der Radträger in unmittelbarer Radnähe weniger Bauraum verbraucht. Gleichzeitig verschiebt sich durch die Rückverlagerung der am Radträger eingesparten Gelenkstelle der Schwerpunkt der ungefederten Masse der Radaufhängung des einzelnen Rades in Richtung Fahrzeugmitte, wodurch sich die Fahrdynamik verbessert.

Die Wirkungslinie des oberen Lenkers und die Wirkungslinie der Koppelstange schneiden die theoretische oder reale Lenkachse und/oder kreuzen sie in einem kurzem Abstand von 1 bis 10 mm. Das bewirkt ein präzises Lenkverhalten und minimalen Reifenverschleiß. Hierbei können beispielsweise der obere Lenker oder die Koppelstange räumlich vor der theoretischen Lenkachse enden.
Ferner weist die Einzelradaufhängung anstelle eines einteiligen unteren Schräglenkers zwei separate Einzellenker auf. Die beiden Lenker können so angeordnet werden, daß ihre Wirkungslinien zumindest in der Projektion auf die Fahrbahn ein einem Quer- oder Schräglenker entsprechendes Dreieck bilden. Die theoretische Lenkachse wird von den Wirkungslinien entweder geschnitten oder gekreuzt. Die beiden Lenker enden räumlich vor der theoretischen Lenkachse in zwei separaten, benachbarten Gelenkstellen am Radträger.

Bei dieser Weiterentwicklung des bekannten Koppelachsprinzips für eine Vierlenkerachse kann die Lenkachse am Rad frei gewählt werden, so daß sich im Felgenbereich genug Bauraum ergibt, beispielsweise für eine groß dimensionierte Bremseinrichtung. Die wichtigen achskinematischen Kenngrößen wie z.B. der Lenkrollradius, der Stoßradius oder die Nachlaufstrecke können trotz eingeschränkter Platzverhältnisse frei gewählt werden. Durch die Aufteilung des unteren Lenkers in zwei Einzellenker und die Anlenkung der Koppelstange an oder nahe an die Wirkungslinie eines unteren Lenkers ergibt sich für das Rad eine momentane Lenkachse, die zumindest näherungsweise durch den Schnitt- oder Kreuzungspunkt der Wirkungslinien der unteren Einzellenker geht.

Weitere Einzelheiten der Erfindung ergeben sich aus den nicht zitierten Unteransprüchen und den nachfolgenden Beschreibungen von zwei schematisch dargestellten Ausführungsformen:
- Figur 1:: Einzelradaufhängung in Rückansicht mit einem die Radaufhängung über die Koppelstange abstützenden obe ren Lenker;
- Figur 2:: wie Figur 1, jedoch mit einer sich am oberen Lenker abstützenden Koppelstange;
- Figur 3:: Seitenansicht zu Figur 2;
- Figur 4:: Draufsicht zu Figur 2.

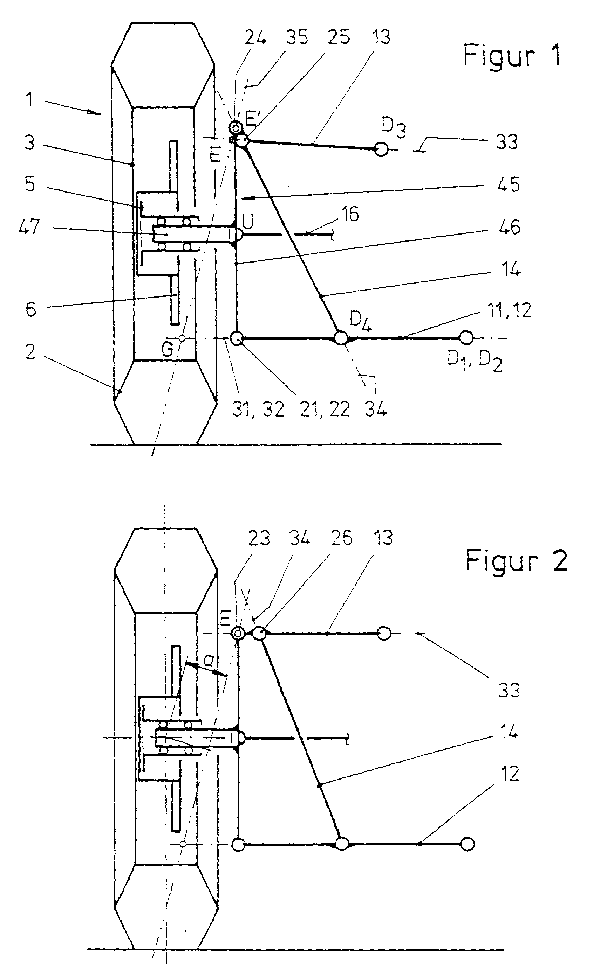

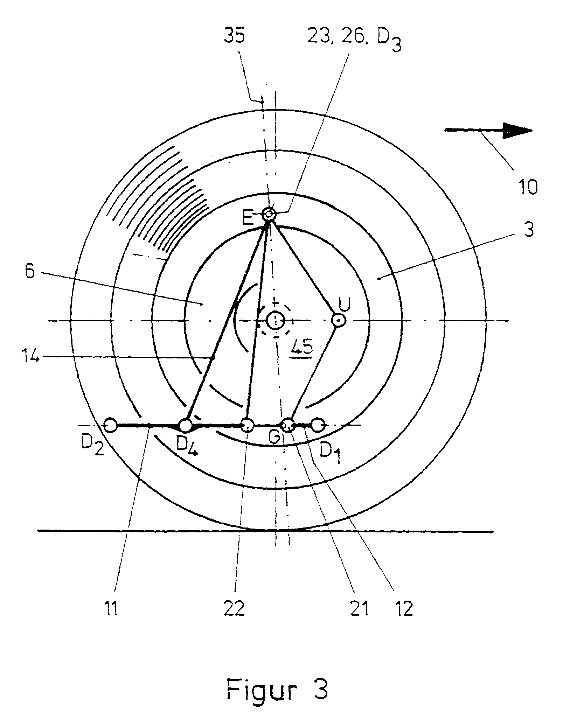

Die Figuren 1 und 2 - 4 zeigen je eine Einzelradaufhängung eines nicht angetriebenen, gelenkten Kraftfahrzeugrad (1). Das aus einer Felge (3) und einem Reifen (2) bestehende Rad (1) ist an einem schwenkbaren Achszapfen (47) gelagert. Das Rad (1) sitzt über eine wälzgelagerte Radnabe (5) auf dem Achszapfen (47). Zwischen dem Flansch der Radnabe (5) und der Felge (3) ist die Bremsscheibe (6) angeordnet.

Der im allgemeinen sternförmige Radträger (45) ist hier vereinfacht als eine ebene, viereckige Platte (46) mit einem angeformten zylindrischen Achszapfen (47) dargestellt. Die Ecken der Platte (46) sind in Figur 1 die Gelenkstellen (21-22, 24, U) und in Figur 2-4 die Gelenkstellen (21-23, U).

Der Radträger (45) ist am Fahrzeugaufbau über vier Lenker (11-13, 16) in den Anlenkpunkten (D₁-D₃) angelenkt. Der Anlenkpunkt für den vierten Lenker, den Spurstangenabschnitt (16), ist nicht dargestellt.

Die beiden unteren Lenker (11) und (12), die am Radträger (45) in den Gelenkstellen (21) und (22) enden, liegen beispielsweise in einer zur Fahrbahn parallelen Ebene. Dabei bilden die Wirklinien (31) und (32) der Lenker (11, 12) die Schenkel eines Dreiecks (9), dessen radseitige Spitze im Idealfall auf oder in der Nähe der theoretischen bzw. momentanen Lenkachse (35) liegt. Die unteren Einzellenker (11, 12) und die Lenkachse (35) schneiden sich in den Figuren 1-4 im Punkt (G). Je nach konstruktiver Ausführungsform kreuzen die Wirkungslinien (31) und (32) die momentane Lenkachse (35) im Bereich des Punktes (G). Hierbei können sich die Wirkungslinien (31) und (32) - anstatt sich zu schneiden - ebenfalls nur kreuzen.

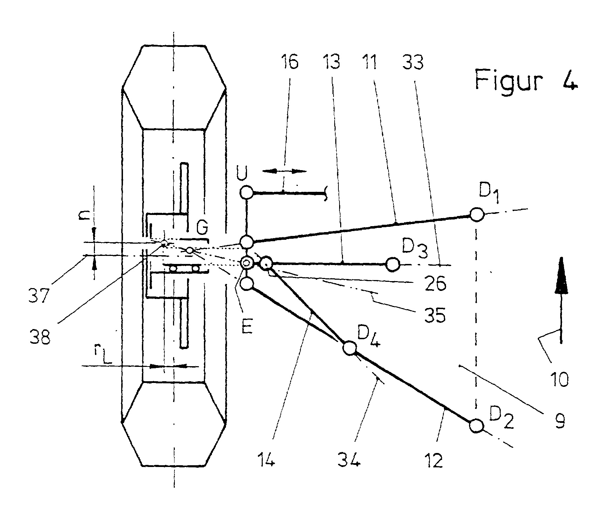

Die Lenkachse (35) schneidet in den Ausführungsbeispielen die Radaufstandsfläche, vgl. Figur 4, außerhalb ihres Zentrums im Punkt (38). Dieser Punkt liegt - in Fahrtrichtung (10) gesehen - um die Nachlaufstrecke "n" vor dem Zentrum. Ferner ist er um den negativen Lenkrollradius "r_{L}" gegenüber dem Zentrum versetzt.

Zwischen dem hinteren, unteren Lenker (12) und dem Radträger (45) ist eine Koppelstange (14) gelenkig angeordnet, vgl. Figur 1. Die Koppelstange (14) ist dazu am Lenker (12) in einer Anlenkstelle (D₄) und am Radträger (45) in der Gelenkstelle (24) gelagert. Sie stützt den Radträger (45) gegenüber dem Lenker (12) ab. Die Gelenkstelle (24) liegt hier auf der theoretischen Lenkachse (35) und bildet dort den obersten Punkt des Radträgers (45). Die Wirkungslinie (34) der Koppelstange (14) schneidet im ersten Ausführungsbeispiel die theoretische Lenkachse (35) im Punkt (E').

Oberhalb der horizontalen Radmittenebene ist ein dritter Lenker (13) zwischen dem Fahrzeugaufbau und der Koppelstange (14) angeordnet. Der obere Lenker (13), der hier beispielsweise in Fahrzeugquerrichtung positioniert ist, stützt sich aufbauseitig in der Anlenkstelle (D₃) ab. An der Koppelstange (14) ist er in der Gelenkstelle (25) gelagert. Die Gelenkstellen (24) und (25) liegen nahe beieinander. Die Wirkungslinie (33) kann hier beispielsweise die Lenkachse (35) in kurzem Abstand auch dann kreuzen, wenn der Lenker (13) bezogen auf die Fahrtrichtung (10) zur besseren Abstützung der positiven und negativen Beschleunigungskräfte weit vor oder hinter der Gelenkstelle (25) am Fahrzeugaufbau gelagert ist.

Die Wirkungslinie (33) des beispielsweise annähernd horizontal ausgerichteten Lenkers (13) schneidet hier die theoretische Lenkachse (35) im Punkt (E). Gegebenenfalls kann sie die Lenkachse (35) im Bereich des Punktes (E) auch nur kreuzen.

Am Radträger (45) ist beispielsweise im Bereich vor der Radmittellinie (37) die Gelenkstelle (U) angeordnet. Die Gelenkstelle (U) stellt das Ende des hier in der Platte (46) integrierten Spurhebels dar. In ihr ist ein beispielsweise achsparalleler Spurstangenabschnitt (16) gelenkig gelagert.

In den Figuren 2 - 4 lenkt der obere Lenker (13) den Radträger (45) in einer Gelenkstelle (23) an. Diese Gelenkstelle liegt hier auf der Lenkachse (35). Folglich schneidet die Wirkungslinie (33) die Lenkachse (35) zwangsläufig.

Die Koppelstange (14) ist in diesem zweiten Ausführungsbeispiel zwischen dem hinteren, unteren Lenker (12) und den oberen Lenker (13) angeordnet. Am oberen Lenker (13) stützt sie sich in einer dort gelegenen Gelenkstelle (26) ab, die sich in der Nähe der Gelenkstelle (23) befindet. Die Wirkungslinie (34) der Koppelstange (14) kreuzt hier die Lenkachse (35) oberhalb des Punktes (E) in kurzem Abstand. Sie kann die Lenkachse (35) je nach Lage des Lenkers (13) auch schneiden.

Die Einzelradaufhängung ist mit Hilfe einer üblichen - hier nicht dargestellten - Fahrzeugfeder und einem bekannten Stoßdämpfer oder einem Federbein am Fahrzeugaufbau abgestützt. Die Abstützung der Feder und des Dämpfers bzw. des Federbeins an der Einzelradaufhängung erfolgt beispielsweise am vorderen, unteren Lenker (11). Bei einer Einzelradaufhängung mit angetriebenem Fahrzeugrad werden die Anlenkpunkte am Lenker (11) so gewählt, daß die antreibende Gelenkwelle den erforderlichen Bewegungsraum hat. Gegebenenfalls werden zwischen dem Lenker und den Feder- und/oder Dämpferelementen ein Zwischenelement angeordnet, mit dem der Bewegungsraum der Gelenkwelle umgangen wird.

### Bezugszeichenliste

- 1: Rad
- 2: Reifen
- 3: Felge

- 5: Radnabe
- 6: Bremsscheibe

- 9: Dreieck, aus unteren Lenkern (11, 12)
- 10: Fahrtrichtung

- 11: unterer Lenker, vorn
- 12: unterer Lenker, hinten
- 13: oberer Lenker
- 14: Koppelstange

- 16: Spurstangenabschnitt

- 21: Gelenkstelle: Radträger/unterer Lenker (11)
- 22: Gelenkstelle: Radträger/unterer Lenker (12)
- 23: Gelenkstelle: Radträger/oberer Lenker (13)
- 24: Gelenkstelle: Radträger/Koppelstange (14)
- 25: Gelenkstelle auf der Koppelstange (14)
- 26: Gelenkstelle auf dem oberen Lenker (13)

- 31: Wirkungslinie des unteren Lenkers (11)
- 32: Wirkungslinie des unteren Lenkers (12)
- 33: Wirkungslinie des oberen Lenkers (13)
- 34: Wirkungslinie der Koppelstange (14)

- 35: Lenkachse, theoretisch

- 37: Radmittellinie, Rotationsachse
- 38: Schnittpunkt von Lenkachse (35) und Latsch

- 45: Radträger
- 46: Platte
- 47: Achszapfen

- a: Stoßradius, Lenkkrafthebelarm
- D₁-D₃: Anlenkstellen der Lenker am Fahrzeugaufbau
- D₄: Anlenkstellen der Koppelstange (14) am Lenker (12)
- E: Schnittpunkt von Lenkachse (35) und Wirkungslinie des oberen Lenkers (13)
- E': Schnittpunkt von Lenkachse (35) und Wirkungslinie der Koppelstange (14)
- G: Schnittpunkt von Lenkachse und Wirkungslinien der unteren Lenker (11) und (12)
- n: Nachlaufstrecke
- r_{L}: Lenkrollradius
- U: Gelenkstelle zu Spurstangenabschnitt (16)

## Patentansprüche

1. Einzelradaufhängung für Vorderräder (1) eines Kraftfahrzeuges mit einem zu Lenkzwecken schwenkbaren Radträger (45), dessen unteres Ende an einem unteren Querlenker (12) gelagert ist und dessen oberer Bereich sich zum einen über eine Koppelstange (14) an diesem unteren Querlenker (12) auf dessen Wirkungslinie (32) und zum anderen über einen oberen Lenker (13) am Fahrzeugaufbau abstützt,
- wobei die auf der Wirkungslinie (32) oder nahe der Wirkungslinie (32) liegende Anlenkstelle (D₄) der Koppelstange (14) in Fahrtrichtung gesehen hinter der durch die Radmittellinie (37) vorgegebenen vertikalen Fahrzeugquerebene liegt,
- wobei entweder der obere Lenker (13) in der Nähe des oberen Endes des Radträgers (40, 45) an der Koppelstange (14) angelenkt ist
- oder die Koppelstange (14) in der Nähe des oberen Endes des Radträgers (40, 45) am oberen Lenker (13) angelenkt ist und
- wobei in beiden Fällen die Wirkungslinie (33) des oberen Lenkers (13) und die Wirkungslinie (34) der Koppelstange (14) die Lenkachse (35) schneiden und/oder in einem kurzen Abstand kreuzen.

2. Einzelradaufhängung gemäß Anspruch 1, **dadurch gekennzeichnet, dass** die Koppelstange (14) räumlich im oder vor dem gemeinsamen Schnittpunkt (E') von der theoretischen Lenkachse (35) und der Wirkungslinie (34) der Koppelstange (14) in einer Gelenkstelle (24) am Radträger (40, 45) endet.

3. Einzelradaufhängung gemäß Anspruch 1, **dadurch gekennzeichnet, dass** der obere Lenker (13) räumlich im oder vor dem gemeinsamen Schnittpunkt (E) von der theoretischen Lenkachse (35) und der Wirkungslinie (33) des oberen Lenkers (13) in einer Gelenkstelle (23) am Radträger (40, 45) endet.

4. Einzelradaufhängung gemäß Anspruch 1, **dadurch gekennzeichnet, dass** zwei untere Querlenker (11, 12) vorgesehen sind, deren Wirkungslinien (31, 32) zumindest in der Projektion auf die Fahrbahn ein einem Quer- oder Schräglenker entsprechendes Dreieck (9) bilden und die theoretische Lenkachse (35) in mindestens einem Punkt (G) schneiden, oder zumindest im Bereich dieses Punktes oder dieser Punkte kreuzen, wobei die Lenker (11, 12) räumlich vor der theoretischen Lenkachse (35) in zwei separaten, benachbarten Gelenkstellen (21, 22) am Radträger (40, 45) enden.

## Claims

1. An independent suspension system for front wheels (1) on a motor vehicle with a steering knuckle (45) which can be swivelled for steering purposes, the lower end of which is mounted on a lower transverse suspension link (12) and the upper area of which is supported on one hand on this lower transverse suspension link (12) on its line of influence by means of a connecting rod (14) and on the other on the vehicle body by means of an upper suspension link (13),
- joint (D₄) on the connecting rod (14) which lies on or near the line of influence (32), viewed in the direction of travel, being located behind the vertical transverse plane of the vehicle predetermined by the wheel centre line (37),
- either the upper suspension link (13) being joined to the connecting rod (14) in proximity to the upper end of the steering knuckle (40, 45),
- or the connecting rod (14) being joined to the upper suspension link (13) in proximity to the upper end of the steering knuckle (40, 45), and
- in both cases the line of influence (33) of the upper suspension link (13) and the line of influence (34) of the connecting rod (14) bisecting and/or crossing close to the steering axis (35).

2. An independent suspension system in accordance with claim 1, **characterised in that**
the connecting rod (14) terminates at a joint (24) on the steering knuckle (40, 45) spatially at or before the common point of intersection (E') of the theoretical steering axis (35) and the line of influence (34) of the connecting rod (14).

3. An independent suspension system in accordance with claim 1, **characterised in that**
the upper steering link (14) terminates at a joint (23) on the steering knuckle (40, 45) spatially at or before the common point of intersection (E') of the theoretical steering axis (35) and the line of influence (34) of the upper suspension link (13).

4. An independent suspension system in accordance with claim 1, **characterised in that**
two lower transverse suspension links (11, 12) are provided, the lines of influence (31, 32) of which form a triangle (9) corresponding to a transverse or semi-trailing suspension link at least in their projection onto the road surface and bisect the theoretical steering axis (35) at at least one point (G) or cross the theoretical steering axis (35) at least in the area of this/these point(s), the suspension links (11, 12) terminating at two separate, neighbouring joints (21, 22) on the steering knuckle (40, 45) spatially before the theoretical steering axis (35).

## Revendications

1. Suspension indépendante pour les roues avant (1) d'un véhicule automobile, comportant un porte-fusée (45) mobile en pivotement à des fins de direction, dont l'extrémité inférieure est montée sur un bras transversal inférieur (12) et dont la zone supérieure prend appui d'une part via une barre de liaison (14) sur ce bras transversal inférieur (12) sur sa ligne d'action (32) et d'autre part via un bras supérieur (13) sur la caisse du véhicule, dans laquelle
- l'emplacement d'articulation (D₄), situé sur la ligne d'action (32) ou à proximité de la ligne d'action (32), de la barre de liaison (14) se trouve, vu en direction de circulation, en arrière du plan transversal vertical du véhicule déterminé par la ligne médiane (37) des roues,
- soit le bras supérieur (13) est articulé à proximité de l'extrémité supérieure du porte-fusée (40, 45) sur la barre de liaison (14),
- soit la barre de liaison (14) est articulée à proximité de l'extrémité supérieure du porte-fusée (40, 45) sur le bras supérieur (13), et
- dans les deux cas, la ligne d'action (33) du bras supérieur (13) et la ligne d'action (34) de la barre de liaison (14) recoupent l'axe de direction (35) et/ou le croisent à courte distance.

2. Suspension indépendante selon la revendication 1, **caractérisée en ce que** la barre de liaison (14) se termine, dans l'espace, dans ou en avant du point d'intersection commun (E') de l'axe de direction théorique (35) et de la ligne d'action (34) de la barre de liaison (14), à un emplacement articulé (24) sur le porte-fusée (40, 45).

3. Suspension indépendante selon la revendication 1, **caractérisée en ce que** le bras supérieur (13) se termine, dans l'espace, dans ou en avant du point d'intersection commun (E) de l'axe de direction théorique (35) et de la ligne d'action (33) du bras supérieur (13), à un emplacement articulé (23) sur le porte-fusée (40, 45).

4. Suspension indépendante selon la revendication 1, **caractérisée en ce qu'**il est prévu deux bras transversaux inférieurs (11, 12) dont les lignes d'action (31, 32) forment, au moins en projection sur la chaussée, un triangle (9) correspondant à un bras transversal ou oblique, et recoupent l'axe de direction théorique (35) à au moins un point (G), ou le croisent au moins dans la zone de ce point ou de ces points, les bras (11, 12) se terminant, dans l'espace, en avant de l'axe de direction théorique (35), par deux emplacements articulés (21, 22) voisins séparés sur le porte-fusée (40, 45).
